# FASCICULE DE BREVET EUROPEEN

(11) **EP 1 351 474 B1**
(45) Date de publication et mention de la délivrance du brevet: **11.01.2006**
(21) Numéro de dépôt: 02007719.4
(22) Date de dépôt: 05.04.2002
(51) Int. Cl.: H04M 1/03, H04M 1/18

(54) **Dispositif de protection anti-chocs pour capsules dans un combiné téléphonique**
Schokprotecktionsvorrichtung für Wandlerkapsel eines Telefonhandapparats
Transducer unit's anti-shock protection device for a telephone handset

(43) Date de publication de la demande: 08.10.2003
(73) Titulaire: IPM International SA, 1211 Genève 16 (CH)
(72) Inventeur: Martin, Timothée, 26000 Valence (FR)
(74) Mandataire: Wenger, Joel-Théophile

(56) Documents cités:
- EP-A- 0 317 167
- EP-A- 0 677 944
- EP-A- 0 918 426
- EP-A- 1 154 617
- WO-A-00/76183
- US-A- 5 201 069

## Description

La présente invention concerne un dispositif de protection anti-chocs d'une capsule dans un combiné téléphonique.

Un combiné téléphonique est constitué d'un manche allongé dont chaque extrémité forme un compartiment contenant un élément acoustique appelé capsule. Cette dernière, en général en forme de pastille, comporte une face supérieure dont la zone centrale est percée de trous et une face inférieure munie de deux contacts électriques. Chaque compartiment est fermé par un couvercle appelé bonnette, percée d'orifices en regard de la face supérieure de la capsule, autorisant le passage des ondes sonores.

Le premier compartiment contient une capsule servant de microphone et le second contient une capsule servant d'écouteur. Un câble, fixé sur la paroi extérieure du compartiment microphone, relie les capsules du combiné via leurs contacts à l'appareil téléphonique.

La présente invention se concentre plus particulièrement sur les combinés des téléphones publics ou publiphones qui sont soumis à de nombreuses contraintes. En effet, un publiphone, régulièrement placé à l'extérieur, subit des agressions climatiques (grandes variations de température et d'humidité) et mécaniques (vibrations, chocs, vandalisme) importantes. Tous ces facteurs sont pris en considération lors de la conception et la fabrication des publiphones, cependant, l'élément le plus fragile et le plus remplacé d'un publiphone reste le combiné. Ce dernier est particulièrement visé par des personnes malveillantes qui l'endommagent par des chocs violents, par exemple contre le boîtier du publiphone ou contre un mur. Malgré une coque extérieure renforcée du combiné, réalisée en matériaux résistants, les capsules microphone et écouteur logées dans leurs compartiments ne sont pas capables d'absorber les chocs et sont par conséquent fortement dégradées ou détruites.

Les capsules sont montées dans leurs compartiments respectifs sur des entretoises posées sur des appuis moulés dans le manche. Une bonnette avec des entretoises et un joint adéquats maintiennent la capsule dans une position fixe, elle devient ainsi solidaire du combiné. Un choc sur le combiné est donc transmis directement à la capsule qui est l'élément le plus fragile. Comme cette dernière est constituée d'une membrane mobile munie d'une bobine qui se déplace autour d'un aimant, les conséquences les plus probables d'un choc se traduisent par le fait que:
- l'ensemble membrane bobine percute l'aimant.
- la membrane se déforme de telle façon que son axe se décale par rapport à celui de l'aimant.
- les différents composants de la capsule se séparent.

Tous ces phénomènes, néfastes pour la qualité acoustique du microphone ou de l'écouteur du combiné, rendent le publiphone inutilisable ce qui constitue un inconvénient majeur pour les clients et les opérateurs.

Le document EP0918426 décrit un compartiment microphone d'un combiné téléphonique contenant une capsule microphone entourée par un dispositif de protection. Ce dispositif comprend un disque constituant le fond du compartiment et soutenant la capsule, un anneau élastique encerclant la capsule en la maintenant dans la partie centrale du compartiment et un disque bombé, poreux et transparent aux ondes sonores placé au-dessus de la capsule. Ce disque sépare en deux parties le volume compris entre la bonnette fermant le compartiment et la membrane de la capsule. Le but du dispositif de protection décrit dans ce document, hormis le maintien de la capsule dans le compartiment, est d'éliminer l'influence de moisissures sur le comportement acoustique du microphone du combiné téléphonique.

Le but de la présente invention est de proposer un dispositif de protection anti-chocs des capsules du combiné pouvant aussi être mis en place dans les combinés existants sur les publiphones en service.

Ce but est atteint par un dispositif dont les particularités sont décrites dans la partie caractérisante de la revendication 1.

La première partie du dispositif selon l'invention constitue un fond semi-rigide dans le compartiment du combiné au centre duquel est posée la capsule. La seconde partie en matière plastique souple s'appuyant sur le fond semi-rigide forme un joint qui entoure la capsule en remplissant l'espace entre celle-ci et les parois de la bonnette. Ce joint encercle aussi le bord de la face supérieure de la capsule en laissant apparaître le centre de cette face, qui est percée de trous, à travers une fenêtre, celle-ci étant située en regard des orifices de la bonnette du compartiment.

La capsule ainsi désolidarisée de la coque du combiné bénéficie d'une meilleure résistance aux chocs latéraux et frontaux car ils sont amortis grâce à la souplesse et à la structure du matériau constituant le dispositif de protection anti-chocs. Plus précisément, on peut considérer que la capsule est suspendue dans le compartiment, elle revient à sa position initiale après un choc sans pour autant être endommagée comme mentionné plus haut.

L'invention sera mieux comprise grâce à la description détaillée qui va suivre et qui se réfère aux dessins annexés qui sont donnés à titre d'exemple nullement limitatif, à savoir:
- la figure 1 qui représente une vue d'ensemble d'un combiné
- la figure 2 qui illustre une coupe agrandie d'un compartiment du combiné

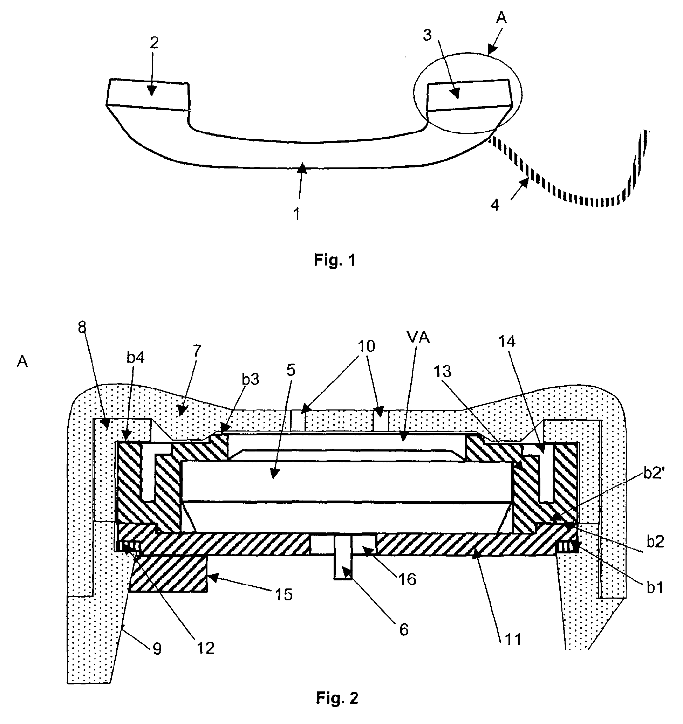

La figure 1 illustre un combiné téléphonique constitué de deux compartiments, l'un pour l'écouteur (2) et l'autre pour le microphone (3) reliés par un manche (1). Un câble (4) relie le combiné au publiphone.

La figure 2 est une coupe agrandie d'un compartiment indiqué par le cercle (A) dans la figure 1. Dans cet exemple, le combiné est muni de deux compartiments cylindriques fermés par des bonnettes circulaires (7) vissés par leurs parois latérales sur la coque du combiné. Une pièce intermédiaire (8) en forme d'anneau crénelé bloque la bonnette une fois vissée pour éviter toute ouverture ultérieure.

La première partie du dispositif de protection anti-chocs est en matière plastique semi-rigide d'environ 80 shA (dureté Shore A). Elle forme une entretoise (11) posée sur un anneau plat (12) qui est posé à son tour sur des appuis (9) répartis le long du pourtour de la paroi interne de la partie inférieure du compartiment (2, 3). Cet anneau (12) plat en matériau rigide doit avoir une tenue suffisante afin d'empêcher l'affaissement de l'entretoise semi-rigide (11) vers le fond du compartiment lors du montage du combiné ou lors de chocs.

Selon une variante, l'anneau plat (12) peut être fixé sur les appuis (9) ou faire partie intégrante (moulé) de la paroi du compartiment.

De plus, l'entretoise (11) est pourvue d'un ergot (15) saillant sur le bord de sa face dirigée vers le fond du compartiment qui vient s'emboîter entre deux appuis (9) consécutifs du pourtour de la paroi interne du compartiment. Cet ergot sert à empêcher la rotation de l'entretoise (11), notamment lors de la fermeture du compartiment par vissage de la bonnette (7). L'anneau plat rigide (12) posé sur les appuis (9) est interrompu pour laisser le passage de l'ergot (15), ce qui lui donne approximativement la forme d'un C.

L'entretoise semi-rigide (11), forme sensiblement un disque dans le cas du combiné à compartiments cylindriques de l'exemple. La capsule (5) est placée dans la zone centrale du disque de façon à ce que sa face percée de trous soit dirigée vers le haut. Les contacts électriques (6) situés sur la face opposée de la capsule passent au travers d'orifices correspondants (16) pratiqués dans le disque entretoise (11). Ces derniers sont connectés à des fils électriques qui passent par le fond du compartiment et à l'intérieur du manche (1) pour aboutir dans le câble (4) du combiné.

Le bord de la face inférieure du disque est profilé de façon à constituer un logement (b1) où s'ajuste l'anneau plat rigide (12) lors du montage de l'ensemble formé par l'anneau et le disque entretoise sur les appuis (9) du fond du compartiment. Cet ensemble conserve ainsi une position fixe sans que ses éléments se déplacent lors de chocs. Le bord de la face supérieure du disque (b2) est surélevé pour assurer le positionnement de la deuxième partie du dispositif de protection anti-chocs (13).

Cette seconde partie (13) est en matière plastique souple de faible dureté soit environ 40 shA (dureté Shore A). Elle forme un joint cylindrique posé sur le bord (b2) de la face supérieure du disque entretoise (11). La face inférieure de ce joint comporte un profil (b2') qui lui permet de se positionner en s'emboîtant sur le bord surélevé (b2) de la face supérieure du disque entretoise (11). Ce joint (13) qui occupe l'espace entre la paroi interne de la bonnette (7) et le flanc de la capsule (5) encercle entièrement cette dernière.

La hauteur totale du joint (13) est plus grande que celle de la capsule (5) de façon à maintenir une distance fixe entre la face supérieure de celle-ci et la bonnette. La partie supérieure (b3) du joint (13) se replie sur le pourtour du bord de la face supérieure de la capsule (5) pour toucher le bord interne de la face percée de la bonnette (7). De cette façon le joint est maintenu en position tout en étant légèrement comprimé entre la bonnette et le disque entretoise. Un espace fixe qui définit un volume fixe, appelé volume acoustique (VA) est ainsi délimité par le bord (b3) replié du joint, la face supérieure de la capsule et la face interne de la bonnette. Ce joint, en contact avec les parois latérales et le bord de la capsule, assure également l'étanchéité du volume acoustique (VA) en évitant toute fuite des ondes sonores vers la face inférieure de la capsule, ce qui nuit à la qualité acoustique du microphone ou de l'écouteur.

Afin d'améliorer la souplesse latérale du joint et son pouvoir d'absorption des chocs, la section de celui-ci forme sensiblement un U dont les branches sont en contact avec la paroi latérale interne de la bonnette d'une part et avec le flanc de la capsule d'autre part. La partie médiane et vide du U (14) constitue une liberté de mouvement accrue de la capsule en cas de choc latéral.

Dans le compartiment écouteur, le bord supérieur du joint qui est en contact avec la paroi interne (b4) du compartiment comporte une échancrure qui constitue un logement pour un aimant permanent. Son rôle est d'actionner l'interrupteur du détecteur de raccroché/décroché lorsque le combiné est posé sur son socle intégré au boîtier de l'appareil téléphonique.

L'ensemble formé par le disque entretoise (11) et le joint (13) enveloppe la capsule (5) en constituant une sorte de gangue souple et déformable autour de celle-ci en ne laissant apparaître que la zone centrale de la face supérieure de la capsule. Celle-ci est donc visible par une fenêtre circulaire dans cet exemple, délimitée par les bords repliés du joint; les trous percés (10) dans la bonnette du compartiment se trouvent en regard de cette face visible. Ces derniers servant au passage des ondes sonores.

Cette gangue maintient la position de la capsule tout en lui laissant la possibilité de se mouvoir en cas de choc pour ensuite revenir dans sa position initiale. La nature flexible de la matière, sa structure, la division en parties semi-rigide et souple et le positionnement fixe du dispositif de protection sont autant de facteurs qui contribuent à absorber efficacement l'énergie de chocs sur le combiné sans en endommager les capsules.

Le contour extérieur de l'ensemble du dispositif de protection anti-choc est bien entendu adapté à la forme du compartiment du combiné dont il épouse les parois latérales internes. Ces dernières n'étant pas forcément circulaires peuvent adopter un contour s'approchant plutôt d'une forme rectangulaire aux angles arrondis par exemple.

## Revendications

1. Dispositif de protection anti-chocs pour une capsule (5) servant de microphone ou d'écouteur dans un combiné téléphonique, ladite capsule (5) étant disposée à l'intérieur d'un compartiment (2, 3) du combiné, ledit dispositif comprenant une première partie (11), ayant au moins une zone en appui à l'intérieur dudit compartiment (2, 3), sur laquelle s'appuie une face de la capsule (5), et une seconde partie déformable (13), maintenant la capsule (5) dans le compartiment (2, 3), disposée au moins partiellement sur le pourtour de ladite capsule (5) est **caractérisé en ce que** la première partie (11) est constituée d'une matière semi-rigide d'une dureté supérieure à celle de la seconde partie (13), et **en ce que** le contour de la face inférieure de ladite première partie (11) forme un bord profilé (b1) dans lequel est logé un anneau plat rigide (12) soutenant ladite première partie (11) dans le compartiment (2, 3).

2. Dispositif selon la revendication 1 **caractérisé en ce que** l'anneau plat rigide (12) est posé sur des appuis (9) répartis sur la paroi interne du compartiment (2, 3).

3. Dispositif selon les revendications 1 et 2 **caractérisé en ce que** le bord profilé (b1) de la face inférieure de la première partie (11) comporte un ergot (15) dirigé vers le fond du compartiment (2, 3) et s'emboîtant entre deux appuis (9) consécutifs en passant par une ouverture correspondante dans l'anneau plat rigide (12).

4. Dispositif selon la revendication 1 **caractérisé en ce que** la face de la première partie (11) comporte des orifices (16) permettant le passage des contacts (6) de la capsule (5) placée sensiblement au centre de ladite face.

5. Dispositif selon les revendications 1 à 4 **caractérisé en ce que** le bord (b2) de la face supérieure de la première partie (11) est surélevé.

6. Dispositif selon la revendication 5, **caractérisé en ce que** la face inférieure de la seconde partie (13) comporte un bord profilé (b2') s'emboîtant sur le bord (b2) surélevé de la première partie (11).

7. Dispositif selon la revendication 1 **caractérisé en ce que** la seconde partie (13) forme un joint entourant le pourtour et le bord de la face supérieure de la capsule (5), ledit joint occupe l'espace entre les parois latérales internes du compartiment (2, 3) et le flanc de la capsule (5) et s'appuie sur la face interne d'une bonnette (7) fermant ledit compartiment (2, 3).

8. Dispositif selon la revendication 7 **caractérisé en ce que** la section du joint forme sensiblement un U dont les branches sont en contact avec la paroi latérale interne du compartiment (2, 3) d'une part et avec le flanc de la capsule (5) d'autre part.

9. Dispositif selon les revendications 7 et 8 **caractérisé en ce que** la hauteur totale du joint est plus grande que celle de la capsule (5), l'espace ainsi délimité par la bonnette (7) du compartiment (2, 3), la face supérieure de la capsule (5) et le bord supérieur (b3) du joint entourant le bord de la face supérieure de ladite capsule (5) délimite un volume fixe (VA).

10. Dispositif selon les revendications 1 à 9 **caractérisé en ce que** l'ensemble formé par la première partie (11) et la seconde partie (13) enveloppe la capsule (5) en laissant apparaître la zone centrale de la face supérieure de la capsule (5), ladite zone se trouvant en regard d'orifices (10) percés dans la face de la bonnette (7) du compartiment (2, 3) du combiné.

11. Dispositif selon la revendication 10 **caractérisé en ce que** le contour extérieur de l'ensemble épouse la forme des parois latérales internes du compartiment (2, 3) du combiné.

## Patentansprüche

1. Stosssicherungsvorrichtung für eine als Mikrophon oder Hörer in einem Handapparat dienende Kapsel (5), wobei die Kapsel (5) im Inneren einer Kammer (2, 3) des Handapparats angeordnet ist und wobei die Vorrichtung einen ersten Abschnitt (11), der zumindest einen im Inneren der Kammer (2, 3) aufliegenden Bereich besitzt, auf dem eine Seite der Kapsel (5) ruht, sowie einen zweiten, verformbaren Abschnitt (13) umfasst, der die Kapsel (5) in der Kammer (2, 3) hält und zumindest teilweise auf der Peripherie der Kapsel (5) angeordnet ist, und **dadurch gekennzeichnet ist, dass** der erste Abschnitt (11) aus einem halbstarren Material besteht, dessen Härte grösser als die des zweiten Abschnitts (13) ist, und dadurch, dass die Kontur der Unterseite des ersten Abschnitts (11) eine Profilkante (b1) bildet, in der ein starrer Flachring (12) untergebracht ist, der den ersten Abschnitt (11) in der Kammer (2, 3) abstützt.

2. Vorrichtung nach Anspruch 1, **dadurch gekennzeichnet, dass** der starre Flachring (12) auf Stützen (9) ruht, die über die Innenwand der Kammer (2, 3) verteilt sind.

3. Vorrichtung nach Ansprüchen 1 und 2, **dadurch gekennzeichnet, dass** die Profilkante (b1) der Unterseite des ersten Abschnitts (11) einen Vorsprung (15) aufweist, der zum Boden der Kammer (2, 3) weist und sich zwischen zwei aufeinanderfolgende Stützen (9) einpasst, indem er durch eine entsprechende Öffnung im starren Flachring (12) hindurchgeht.

4. Vorrichtung nach Anspruch 1, **dadurch gekennzeichnet, dass** die Aussenseite des ersten Abschnitts (11) Löcher (16) umfasst, die den Durchgang von Kontakten (6) der Kapsel (5) erlauben, die im wesentlichen auf der Mitte dieser Aussenseite ruht.

5. Vorrichtung nach Ansprüchen 1 bis 4, **dadurch gekennzeichnet, dass** die Kante (b2) der Oberseite des ersten Abschnitts (11) überhöht ist.

6. Vorrichtung nach Anspruch 5, **dadurch gekennzeichnet, dass** die Unterseite des zweiten Abschnitts (13) eine Profilkante (b2') aufweist, die in die überhöhte Kante (b2) des ersten Abschnitts (11) eingreift.

7. Vorrichtung nach Anspruch 1, **dadurch gekennzeichnet, dass** der zweite Abschnitt (13) eine Dichtung bildet, die die Peripherie und den Rand der Oberseite der Kapsel (5) umgibt, den Raum zwischen den inneren Seitenwänden der Kammer (2, 3) und der Flanke der Kapsel (5) umgibt und auf der Innenseite einer Kappe (7) ruht, die die Kammer (2, 3) abschliesst.

8. Vorrichtung nach Anspruch 7, **dadurch gekennzeichnet, dass** der Querschnitt der Dichtung im Wesentlichen U-förrnig ist, wobei die Schenkel des U einerseits mit der inneren Seitenwand der Kammer (2, 3) und andererseits mit der Flanke der Kapsel (5) in Berührung stehen.

9. Vorrichtung nach Ansprüchen 7 und 8, **dadurch gekennzeichnet, dass** die Gesamthöhe der Dichtung grösser als die der Kapsel (5) ist, wobei der Raum, der somit durch die Kappe (7) der Kammer (2, 3), die Oberseite der Kapsel (5) und den oberen Rand (b3) der Dichtung, die den Rand der Oberseite der Kapsel (5) umgibt, begrenzt wird, ein fixiertes Volumen (VA) eingrenzt.

10. Vorrichtung nach Ansprüchen 1 bis 9, **dadurch gekennzeichnet, dass** der durch den ersten Abschnitt (11) und den zweiten Abschnitt (13) gebildete Komplex die Kapsel (5) einhüllt, wobei der mittlere Bereich der Oberseite der Kapsel (5) freigelassen bleibt und wobei sich dieser Bereich Löchern (10) gegenüber befindet, die in die Stirnseite der Kappe (7) der Kammer (2, 3) des Handapparats gebohrt sind.

11. Vorrichtung nach Anspruch 10, **dadurch gekennzeichnet, dass** sich die Aussenkontur des Komplexes der Gestalt der inneren Seitenwände der Kammer (2, 3) des Handapparats anschmiegt.

## Claims

1. Shock-proof protecting device for microphone or earphone unit (5) in a telephone handset, said unit (5) being placed inside a compartment (2, 3) of the handset, said device comprising a first part (11) having at least a supporting area inside said compartment (2, 3) whereon a face of the unit (5) is leaned, and a flexible second part (13), maintaining the unit (5) in the compartment (2, 3), placed at least partially on the circumference of said unit (5), the device is **characterized in that** the first part (11) is made of a semi-rigid material of a higher hardness than the one of the second part (13) and **in that** the circumference of the lower face of said first part (11) forms a profiled edge (b1) wherein is lodged a flat rigid ring (12) sustaining said first part (11) in the compartment (2, 3).

2. Device according to claim 1 **characterized in that** the flat rigid ring (12) is laid on supports (9) distributed on the internal wall of the compartment (2, 3).

3. Device according to the claims 1 and 2 **characterized in that** the profiled edge (b1) of the lower face of the first part (11) includes a pin (15) directed towards the bottom of the compartment (2, 3) and fitted between two consecutive supports (9) by passing through a corresponding opening in the flat rigid ring (12).

4. Device according to claim 1 **characterized in that** the face of the first part (11) includes orifices (16) allowing the passage of the contacts (6) of the unit (5) placed approximately in the center of said face.

5. Device according to the claims 1 to 4 **characterized in that** the edge (b2) of the upper face of the first part (11) is elevated.

6. Device according to claim 5 **characterized in that** the lower face of the second part (13) includes a profiled edge (b2') fitted together with the elevated edge (b2) of the first part (11).

7. Device according to claim 1 **characterized in that** the second (13) part forms a joint surrounding the circumference and the edge of the upper face of the unit (5), said joint fills the space between the internal side walls of the compartments (2, 3) and the flange of the unit (5) and leans on the internal face of a cap (7) closing said compartment (2, 3).

8. Device according to claim 7 **characterized in that** the section of the joint forms approximately a U which branches are in contact on one hand with the internal side wall of the compartment (2, 3) and on the other hand with the flange of the unit (5).

9. Device according to the claims 7 and 8 **characterized in that** the total height of the joint is larger than the one of the unit (5), the space thus delimited with the cap (7) of the compartment (2, 3), the upper face of the unit (5) and the upper edge (b3) of the joint surrounding the edge of the upper face of said unit (5) delimit a fixed volume (VA).

10. Device according to the claims 1 to 9 **characterized in that** the assembly formed with the first part (11) and the second part (13) surrounds the unit (5) by letting appear the central area of the upper face of the unit (5), said area facing orifices (10) drilled in the face of the cap (7) of the compartment (2, 3) of the handset.

11. Device according to claim 10 **characterized in that** the external circumference of the assembly follows the shape of the internal sidewalls of the compartment (2, 3) of the handset.
